Europäisches Patentamt

European Patent Office

Office européen des brevets

(11) Publication number: **0 412 928 B1**

# EUROPEAN PATENT SPECIFICATION

(45) Date of publication of patent specification: **24.05.95**   (51) Int. Cl.⁶: **B60C 9/24**, B60C 9/20

(21) Application number: **90630130.4**

(22) Date of filing: **20.07.90**

(54) **Pneumatic tire.**

(30) Priority: **10.08.89 US 391822**

(43) Date of publication of application:
**13.02.91 Bulletin 91/07**

(45) Publication of the grant of the patent:
**24.05.95 Bulletin 95/21**

(84) Designated Contracting States:
**DE FR GB IT**

(56) References cited:
**EP-A- 0 296 093**
**EP-A- 0 319 588**
**FR-A- 1 579 733**
**GB-A- 526 163**

**PATENT ABSTRACTS OF JAPAN, vol. 10, no. 159 (M-486)[2215], 7th June 1986 & JP-A-61 012 408 (YOKOHAMA GOMU K.K.)**

(73) Proprietor: **THE GOODYEAR TIRE & RUBBER COMPANY**
**1144 East Market Street**
**Akron, Ohio 44316-0001 (US)**

(72) Inventor: **Reuter, René François**
**2 um Kettenhouscht**
**L-9142 Bürden (LU)**
Inventor: **Thise-Fourgon, Marie-Rita**
**50 Route de Wiltz**
**B-6651 Bras (Bastogne) (BE)**

(74) Representative: **Leitz, Paul**
**Goodyear Technical Center-Luxembourg**
**L-7750 Colmar-Berg (LU)**

**Description**

The present invention relates generally to pneumatic tires and more specifically to radial carcass tires having a textile overlay structure located radially outwardly of their belt assembly.

Radial carcass tires having a reinforcing member disposed radially outwardly of the belt assembly comprising textile cords oriented at small angles with respect to the mid-circumferential plane of the tire have been found to be particularly durable when subjected to high revolution speeds.

Such a reinforcing member, referred to as an overlay ply, can be interposed between the radially outermost ply of the belt assembly and the tread and comprise one or more wraps having a width which is about equal to that of the widest of the belt plies.

Alternatively, the overlay ply can consist of two separate axially spaced apart ply portions either disposed radially outwardly of the belt assembly such as to cover the edges of the radially outermost belt ply or interposed between the belt plies such as to extend between the edges thereof.

It has been further proposed in the prior art (see EP-A- 319 588, corresponding to the preamble of claim 1) to assemble the overlay ply from a spirally wound strip, made from cord reinforced elastomeric material, located radially externally to the belt plies.

Another possibility of assembling an overlay ply consists in interposing a spirally wound cord or single yarn, which has been coated with elastomeric material, between the radially outermost ply of the belt assembly and the tread.

The usual reinforcing material for the overlay plies is nylon, which has a Youngs modulus of about 6,000 MPa. Such a low modulus is necessary to accommodate the expansion of the belt during the shaping and vulcanizing steps. High modulus materials, like aramid (80,000 MPa) or rayon (18,000 MPa), are particularly advantageous in high speed tires in view of their dimensional stability. EP-A-296 093 discloses the use of aramid for reinforcing carcass and belt plies. However high modulus materials have up to now been disregarded as reinforcement cords for the overlay ply, because they lack the expansion potential required for shaping and vulcanizing. (It is understood that the above indicated moduli are measured on a homogeneous specimen of the material which is used in the manufacture of the cord and not on a specimen of the cord itself.)

An additional problem encountered in tires having an overlay structure is their proneness to the phenomenon of "flatspotting": when a hot tire comes to rest under load, the tire reinforcing elements in the footprint area cool down under less stress than the other parts, leading to strain differences in these elements; once a cooled down tire starts to rotate again, the strain difference persists until warm-up due to a difference in Youngs modulus of the reinforcing elements at rest and at tire operating temperature.

It is an object of the present invention to provide a pneumatic tire with an overlay structure, which has excellent high speed properties and reduced flatspotting.

Such a tire is provided by the invention as disclosed in the appended claim 1. Preferred embodiments of the invention are defined in the dependent claims.

The twist i.e. the number of turns per unit of length of the yarn or cable is usually indicated in the tire art in turns per inch, in abbreviation TPI (which makes in the metric system, turns per meter, in abbreviation TPM).

The use of high modulus cords in the overlay ply leads to tires including less material for a given reinforcing strength, hence the flatspot contribution from the overlay ply is reduced. Additionally, lighter, cooler running tires are obtained, which have increased high speed performance

It is known in the tire art that the glass transition temperature of the tire components have a major influence on the flatspotting behavior of the tire. It is therefore preferred in tire manufacturing to use components having a relatively high or no glass transition temperature. Among the tire reinforcing elements, aramid and rayon are known to have no glass transition temperatures and therefore, in a preferred embodiment, applicant teaches the use of aramid and rayon.

To acquaint persons skilled in the art most closely related to the instant invention, certain preferred embodiments thereof are now described with reference to the annexed drawings. These embodiments are directed towards the use of aramid cords, as herebelow defined; they are illustrative and can be modified in numerous ways within the spirit and scope of the invention defined in the claims herebelow.

Figure 1 is a cross-sectional view of a pneumatic tire made in accordance with the present invention;

Figure 2 is a side view of a cord according to the present invention; and

Figures 3 and 4 are schematic representations of cross-sections of cords according to the present invention.

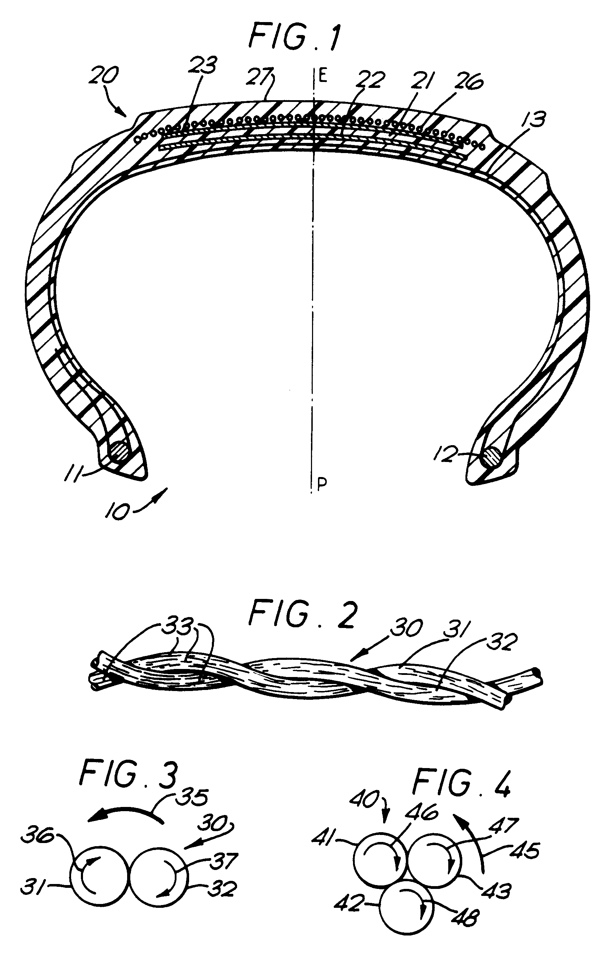

With reference to Figure 1, there is represented a radial carcass pneumatic tire 10 having a pair of substantially inextensible bead cores 11, 12 which are axially spaced apart with a radial carcass ply 13 extending between the bead cores. The carcass ply is folded axially and radially outwardly about each of the bead cores and is reinforced by cords which are substantially parallel to each other and make an angle with the equatorial plane (EP) of the tire. As used herein and in the claims, the "equatorial plane" of the tire is a plane that is perpendicular to the axis of rotation of the tire and passes through the center of the tire tread, the terms "axial" and "axially" refer to directions which are parallel to the axis of rotation of the tire and the terms "radial" and "radially" refer to directions that are radially toward or away from the axis of rotation of the tire. The cords of the carcass ply 13 can be made of any suitable material, for example rayon, polyester, polyamide or aromatic polyamide. The crown area 20 of the tire 10 is reinforced by a belt assembly 21 located radially inwardly of the tire tread 27. The belt assembly is essentially rigid and comprises two concentric belt plies 22 and 23, each of which consists of an elastomeric layer reinforced by steel cords or other suitable materials, as for example aromatic polyamide, glassfiber, carbon-fiber or rayon cords. Within each ply, the cords are substantially parallel to each other. The cords of the radially innermost belt ply 22 make an angle of between 15° to 30° with the equatorial plane (EP) of the tire, whereas the cords of the radially outermost belt ply 23 extend in the diagonally opposite direction to the cords of the radially innermost belt ply i.e. they make an angle of between -15° to -30° with the equatorial plane (EP) of the tire; preferred angles are respectively 21° to 25° and -21° to -25°.

A spirally wound strip 26 is superimposed radially externally to the outermost belt ply 23 and extends transversely over the widest of the belt plies. The spirally wound strip is made from elastomeric material reinforced by aramid cords. As used herein, "aramid" and "aromatic polyamide" are both understood to mean a manufactured fiber in which the fiber-forming substance is generally recognized as a long chain synthetic aromatic polyamide in which at least 85% of the amide linkages are attached directly to the two aromatic rings. Representative of an aramid or aromatic polyamide is a poly (p- phenyleneterephtalamide).

The spiral convolutions of the strip make an angle of between 0-5° with the equatorial plane (EP) and are in abutment with any adjacent convolution. The strip has preferably a thickness in the range of between 0.6 and 1.4 mm and a width in the range of between 10 and 40 mm and a cord distribution density of at least 15 ends per inch, in abbreviation EPI (600 ends per meter, in abbreviation EPM) and preferably in the range of 20 to 50 EPI (800 to 2,000 EPM).

In a prior art tire having a nylon reinforced spirally wound layer, superimposed radially externally on the outermost belt ply, the width of said belt ply ranges between 98 and 107 % of the treadwidth; the treadwidth is defined as the greatest axial distance across the tread, when measured from a footprint of the tire, when the tire is subjected to its design load and when inflated to its design pressure for said load. A large belt ply is usually required to counter centrifugal forces at the shoulder of the tire when travelling at high speed. However, the stresses existing at the belt edges can result in deformation and separation of the belt edges from the surrounding rubber. A small belt ply constitutes a building advantage, but leads to shoulder wear caused by insufficient rigidity of the tread at its edges.

The spirally wound overlay structure overlaps the lateral ends of the radially outermost belt ply by a few mm and provides an excellent rigidity in the circumferential direction as well as a uniform pressure distribution on the tread surface. The spirally wound overlay structure according to the invention allows a reduction of the belt ply width of about 5 %, i.e. the width of the belt plies ranges between about 93 % and 102 % while maintaining the tire's high speed performance at a level at least equal to that of a prior art tire.

Although the overlay structure shown in Figure 1 has only one layer it could equally comprise a second layer located adjacent to and radially outside of the first layer. Preferably, the second layer should have its spiral convolutions wound with the opposite hand to the first layer so that the cords of each layer cross at a very small angle. With such a construction the two layers can be wound continuously in succession without a break in the strip. It is to be understood that the spiral convolutions of the spirally wound strip, in place of being in abutment with any adjacent convolution, can also have an overlapping relationship with the previous convolutions, which overlap can be constant or variable across the width of the belt reinforcing structure without departing from the scope of the instant invention as defined in the appended claims.

It is well known in the tire art that the spiral convolutions of a tire built on a flat cylindrical drum are subjected to different elongations during the shaping and vulcanizing step of the tire manufacturing process because the expansion of the tire is greater in the center portion than in the shoulder portions of the belt reinforcing structure. In order to minimize the resulting differences in the stresses of the strip, it is preferable to wind the strip in the belt center with a very small winding tension as compared to the winding tension used when making the tire shoulder portion.

Alternatively, the surface of the cylindrical drum upon which the strip is spirally wound can be given a slightly convex shape. This convex shape should conform as closely as possible to the sectional radial shape the overlay ply takes in the finished tire, so as to obtain a minimal stretch difference between the center and shoulder portions of the overlay strip during shaping and curing.

Referring now to Figure 2, there is shown a cord 30 comprising two yarns 31, 32 twisted together, each of the yarns comprising a plurality of aramid filaments 33.

The concept of twist can be explained by referring to Figure 3. In the cord 30, each of the yarns 31 and 32 has its component filaments twisted together a given number of turns per unit of length of the yarn (usually expressed in TPI) and additionally the yarns are twisted together a given number of turns per unit of length of the cord. The direction of twist refers to the direction of slope of the spirals of a yarn or cord when it is held vertically. If the slope of the spirals conform in direction to the slope of the letter "S", then the twist is called "S" or "left hand". If the slope of the spirals conform in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. In one embodiment of the invention, as shown in Figure 3, two 1,000 Denier yarns 31 and 32 are twisted in the direction indicated by arrows 36 and 37 at 16 TPI (630 TPM) and the yarns are then twisted together in the direction indicated by arrow 35 at 16 TPI (630 TPM) to form a 1,000/2 Denier cord 30. "Denier" is understood to mean the weight in grams of 9,000 meters of a yarn before the yarn has a twist imparted thereto.

With reference to Figure 4, there is shown a 380/3 Denier cord 40, including three yarns 41, 42 and 43. The yarns are twisted in the direction indicated by arrows 46, 47 and 48 at 18 TPI (730 TPM) and the yarns are then twisted together in the direction indicated by arrow 45 at 18 TPI (710 TPM) to form the cord 40.

The yarns according to the present invention each have a twist of at least 14 TPI (550 TPM) and more preferably of at least 16 TPI (630 TPM); identical twist of the yarns, although not compulsory to implement the invention, simplifies the manufacturing process. The cord has a twist in the range of 10 to 30 TPI (400 to 1,200 TPM) and more preferably in the range of 12 to 24 TPI (480 to 960 TPM). The amount of twist of the cord and of the yarns can be substantially the same. The yarns have the same, left or right hand twist, the cord twist being in the opposite direction. Cords manufactured from yarns having such high twist imparted thereto, have shown the required low modulus to allow green tire expansion in the curing mold.

A cord according to the present invention has a twist multiplier between 6 and 14 and preferably of about 10. "Twist multiplier" refers to a number that is an indicator of the helix angle that the yarns in a cord make with respect to a longitudinal axis of a cord. As used herein and in the claims, the twist multiplier of a cord is determined according to the following equation which is well known in the textile art.

$$TM = 0.0137 \, CT \times (CD)^{1/2}$$

wherein TM is the twist multiplier;

CT is the number of turns per inch (2.54 cm) of cord length; and

CD is the sum of the deniers of the yarns, and/or subgroups of the yarns of the cord before any twist is imparted to the yarns or subgroups. The twist multiplier is an important feature of a cord, because it characterizes its physical properties, like tensile strength, modulus, elongation and fatigue. Twist multipliers above 6 characterize cords showing fair elongation properties and having still an excellent tensile strength; as a result of their relatively high tensile strength these cords can be used as overlay ply with a relatively low Denier, e.g. 1,000 Denier or below. The ply has consequently a low gauge.

The benefits of the present invention become apparent from a comparison test which has been made between radial tires including a conventional spiral overlay, reinforced with 840/2 Denier nylon cords at a density of 33 EPI (1,320 EPM) and tires including a spiral overlay, reinforced with 1,000/2 Denier aramid cords at a density of 30 EPI (120 EPM). Within each tire series A, B and C, the gauges of the strip, the spiral layout as well as the other constructional details of the tire, have been kept the same within the usual manufacturing tolerances. Tires having the size 225/60 R 15 gave the following results, wherein the data obtained from each tire series reinforced with nylon cords in the overlay ply have been given the value 100 and wherein the data from the same series of reference tires reinforced with aramid cords in the overlay ply have been related thereto (i.e. a normalization based on nylon cords):

| Flatspotting | | | | |
|---|---|---|---|---|
| | A | | B | C |
| Nylon | 100 | 100 | 100 | |
| Aramid | 151 | | 134 | 154 |

| High speed performance | | | |
|---|---|---|---|
| | A | B | C |
| Nylon | 100 | 100 | 100 |
| Aramid | 104 | 114 | 104 |

The flatspotting values are based on the evaluation of radial forces measured on broken-in tires. After a fast run to heat the tires up, a first set of measurements is made. Then the tires are parked under nominal load. Once they have cooled down to room temperature follows a second set of measurements. The relative force variations in the footprint area give an indication of the flatspotting.

The high speed performance data have been derived from conventional high speed endurance tests. The conventional high speed endurance tests consist of subjecting the tire to revolution speeds that gradually increase by steps of 10 km/h. The tire which is inflated to its design pressure is pressed against a drum with a force equivalent to its design load and the tire is then revolved with the drum for ten minutes at each of a series of increasing speed steps. The tire's high speed endurance is measured by the highest speed step that it can sustain during a given interval without being destroyed.

The above results clearly demonstrate the superior high speed performance of tires manufactured according to the teaching of the invention.

**Claims**

1. A pneumatic tire (10) comprising a radial ply carcass (13), a tread (27) disposed radially outwardly of the crown region of the carcass and a crown reinforcing structure interposed between the tread portion and the crown region (20) of the carcass in circumferential surrounding relation to the carcass, whereby the crown reinforcing structure includes a belt assembly (21) having at least a first (22), radially innermost and a second (23), radially outermost belt ply, each of the belt plies comprising reinforcement cords of high modulus material extending parallel to one another in each belt ply, and the cords in the first belt ply (22) making with the cords in the second belt ply (23) opposed angles with respect to the equatorial plane (EP) of the tire, as well as a textile overlay structure consisting of a spirally wound strip (26) or a spirally wound cord coated with elastomeric material superimposed radially outwardly and extending transversely over the belt assembly and making an angle of between 0° and 5° with the equatorial plane (EP) of the tire and being reinforced with cords (30,40) made of materials showing on a homogeneous specimen a Youngs modulus of at least 15,000 MPa, characterized
   - in that the cords have a twist multiplier comprised between 8 and 12; and
   - in that at least one of the yarns (31,32,41,42,43) included in the cords (30,40) has a twist of at least 550 TPM (14 TPI).

2. The pneumatic tire (10) according to claim 1, characterized in that at least one of the yarns (31,32,41,42,43) included in the cords (30,40) has a twist of at least 630 TPM (16 TPI).

3. The pneumatic tire (10) according to claim 1, characterized in that said strip (26) has a width in the range of between 10 and 40 mm and in that the cords reinforcing the strip have a fabric density of less than 2400 EPM (60 EPI).

4. The pneumatic tire (10) according to claim 1, characterized in that the cords reinforcing the strips (26) have a fabric density in the range of 800 to 2000 EPM (20 to 50 EPI).

5. The pneumatic tire (10) according to claim 1, characterized in that said strip (26) has a thickness in the range of between 0.6 and 1.4 mm.

EP 0 412 928 B1

**6.** The pneumatic tire (10) according to claim 1, characterized in that the cord(s) of the overlay structure consist(s) of a single yarn of 550 to 4000 dtex (500 to 3,600 Denier).

**7.** The pneumatic tire (10) according to claim 1, characterized in that the cord(s) (30) of the overlay structure consist(s) of 2 yarns (31,32) of 550 to 3300 dtex (500 to 3,000 Denier), both yarns having the same amount of twist and twist direction, the twist direction of the yarns being opposed to that of the cord and in that the yarns are twisted together at least 480 TPM (12 TPI), to form the cord.

**8.** The pneumatic tire (10) according to claim 1, characterized in that the cord(s) (40) of the overlay structure consist(s) of 3 yarns (41,42,43) of 500 to 1,500 Denier, the three yarns having the same twist and twist direction, the twist direction of the yarns being opposed to that of the cord and in that the yarns are twisted together at least 480 TPM (12 TPI), to form the cord.

**9.** The pneumatic tire (10) according to any of claims 1 to 8, characterized in that the textile overlay structure is reinforced with cords (30,40) being made of rayon.

**10.** The pneumatic tire (10) according to any of claims 1 to 8, characterized in that the textile overlay structure is reinforced with cords (30,40) being made of materials showing on a homogeneous specimen a Youngs modulus of at least 40,000 MPa such as aramid.

**Patentansprüche**

**1.** Luftreifen (10), umfassend eine radiale Schichtkarkasse (13), ein Profil (27), welches radial außerhalb des Kronenbereiches der Karkasse angeordnet ist, und eine Kronenverstärkungsstruktur, welche zwischengelagert zwischen dem Profilabschnitt und dem Kronenbereich (20) der Karkasse in einer umfänglich umgebenden Beziehung zu der Karkasse angeordnet ist, wobei die Kronenverstärkungsstruktur eine Gürtelanordnung (21) umfaßt mit zumindest einer ersten (22), radial innersten und einer zweiten (23), radial äußersten Gürtelschicht, wobei jede der Gürtelschichten Verstärkungsfasern umfaßt aus Hochmodulmaterial, welche sich parallel zueinander in jeder Gürtelschicht erstrekken, und wobei die Fasern der ersten Gürtelschicht (22) mit den Fasern in der zweiten Gürtelschicht (23) entgegengesetzte Winkel bezüglich der Äquatorialebene des Reifens bilden, als auch eine Textilauflagestruktur, bestehend aus einem spiralförmig verdrehten Streifen (26) oder einer spiralförmig verdrehten Faser, welche mit elastomerem Material beschichtet ist, und zwar radial außerhalb überlagert, sich transversal über die Gürtelanordnung erstreckt, einen Winkel von zwischen 0° und 5° mit der Äquatorialebene (EP) des Reifens erzeugt und mit Fasern (30, 40) verstärkt ist, hergestellt aus Materialien, welche ein homogenes Muster von Young-Modulen von zumindest 15.000 MPa aufweisen,
dadurch gekennzeichnet,
daß die Fasern einen Verdrehungsmultiplikator aufweisen in einem Bereich zwischen 8 und 12; und
daß zumindest eines der Garne (31, 32, 41, 42, 43), umfaßt in den Fasern (30, 40), eine Verdrehung aufweist von zumindest 550 TPM (14 TPI).

**2.** Luftreifen (10) gemäß Anspruch 1, dadurch gekennzeichnet, daß zumindest eines der Garne (31, 32, 41, 42, 43), umfaßt in den Fasern (30, 40), eine Verdrehung von zumindest 630 TPM (16 TPI) aufweist.

**3.** Luftreifen (10) gemäß Anspruch 1, dadurch gekennzeichnet, daß der Streifen (26) eine Breite aufweist in dem Bereich von 10 bis 40 mm und daß die Fasern, welche den Streifen verstärken, eine Gewebedichte von weniger als 2400 EPM (60 EPI) aufweisen.

**4.** Luftreifen (10) gemäß Anspruch 1, dadurch gekennzeichnet, daß die Fasern, welche die Streifen (26) verstärken, eine Gewebedichte in dem Bereich von 800 bis 2000 EPM (20 bis 50 EPI) aufweisen.

**5.** Luftreifen (10) gemäß Anspruch 1, dadurch gekennzeichnet, daß der Streifen (26) eine Dicke in dem Bereich von 0,6 bis 1,4 mm aufweist.

**6.** Luftreifen (10) gemäß Anspruch 1, dadurch gekennzeichnet, daß die Faser(n) der Auflagestruktur aus einem einzelnen Garn von 550 bis 4000 dtex (500 bis 3.600 Denier) besteht bzw. bestehen.

6

7. Luftreifen (10) gemäß Anspruch 1, dadurch gekennzeichnet, daß die Faser(n) (30) der Auflagestruktur aus zwei Garnen (31, 32) von 550 bis 3300 dtex (500 bis 3.000 Denier) besteht bzw. bestehen, wobei beide Garne dieselbe Menge von Verdrehung und dieselbe Verdrehungsrichtung aufweisen, wobei die Verdrehungsrichtung der Garne entgegengesetzt zu der der Faser ist, und daß die Garne bei zumindest 480 TPM (12 TPI) zusammen verdreht sind, zum Bilden der Faser.

8. Luftreifen (10) gemäß Anspruch 1, dadurch gekennzeichnet, daß die Faser(n) (40) der Auflagestruktur aus drei Garnen (41, 42, 43) von 500 bis 1.500 Denier besteht bzw. bestehen, wobei die drei Gerne dieselbe Verdrehung und Verdrehungsrichtung aufweisen, wobei die Verdrehungsrichtung der Garne entgegengesetzt zu der der Faser ist, und daß die Garne mit zumindest 480 TPM (12 TPI) zusammen verdreht sind zum Bilden der Faser.

9. Luftreifen (10) gemäß einem der Ansprüche 1 bis 8, dadurch gekennzeichnet, daß die Textilauflagestruktur mit Fasern (30, 40) verstärkt ist, welche aus Kunstseide hergestellt sind.

10. Luftreifen (10) gemäß einem der Ansprüche 1 bis 8, dadurch gekennzeichnet, daß die Textilauflagestruktur mit Fasern (30, 40) verstärkt ist, welche aus Materialien hergestellt sind, welche ein homogenes Muster von Young-Modulen von zumindest 40,000 MPa aufweisen, wie z.B. Aramid.

**Revendications**

1. Bandage pneumatique (10) comprenant une carcasse à nappe radiale (13), une bande de roulement (27) disposée à l'extérieur de la région de couronne de la carcasse en direction radiale et une structure de renforcement de couronne intercalée entre la portion de bande de roulement et la région de couronne (20) de la carcasse entourant la carcasse en direction circonférentielle, dans lequel la structure de renforcement de couronne englobe un assemblage de ceinture (21) possédant au moins une première nappe de ceinture (22) la plus à l'intérieur en direction radiale et une seconde nappe de ceinture (23) la plus à l'extérieur en direction radiale, chacune des nappes de ceinture comprenant des câblés de renforcement en une matière à module élevé s'étendant parallèlement l'un à l'autre dans chaque nappe de ceinture, les câblés dans la première nappe de ceinture (22) formant, avec les câblés dans la seconde nappe de ceinture (23), des angles opposés par rapport au plan équatorial (EP) du bandage pneumatique, ainsi qu'une structure de recouvrement en textile constituée d'une bande enroulée en spirale (26) ou d'un câblé enroulé en spirale recouvert d'une matière élastomère, superposée à l'extérieur en direction radiale et s'étendant transversalement par-dessus l'assemblage de ceinture en formant un angle entre 0° et 5° avec le plan équatorial (EP) du bandage pneumatique, tout en étant renforcée avec des câblés (30, 40) réalisés en une matière présentant, sur un échantillon homogène, un module de Youngs d'au moins 15.000 MPa, caractérisé
   - en ce que les câblés possèdent un coefficient de torsion compris entre 8 et 12; et
   - en ce qu'au moins un des fils (31, 32, 41, 42, 43) englobé dans les câblés (30, 40) possède une torsion d'au moins 550 TPM (14 TPI).

2. Bandage pneumatique (10) selon la revendication 1, caractérisé en ce qu'au moins un des fils (31, 32, 41, 42, 43) englobé dans les câblés (30, 40) possède une torsion d'au moins 630 TPM (16 TPI).

3. Bandage pneumatique (10) selon la revendication 1, caractérisé en ce que ladite bande (26) possède une largeur dans le domaine entre 10 et 40 mm, et en ce que les câblés renforçant la bande possèdent une densité de tissu inférieure à 2400 EPM (60 EPI).

4. Bandage pneumatique (10) selon la revendication 1, caractérisé en ce que les câblés renforçant les bandes (26) possèdent une densité de tissu dans le domaine de 800 à 2000 EPM (20 à 50 EPI).

5. Bandage pneumatique (10) selon la revendication 1, caractérisé en ce que ladite bande (26) possède une épaisseur dans le domaine entre 0,6 et 1,4 mm.

6. Bandage pneumatique (10) selon la revendication 1, caractérisé en ce que le ou les câblés de la structure de recouvrement sont constitués d'un fil unique de 550 à 4000 dTex (500 à 3.600 deniers).

7.  Bandage pneumatique (10) selon la revendication 1, caractérisé en ce que le ou les câblés (30) de la structure de recouvrement sont constitués par deux fils (31, 32) de 550 à 3300 dTex (500 à 3.000 deniers), les deux fils possédant la même valeur de torsion et la même direction de torsion, la direction de torsion des fils étant opposée à celle du câblé et en ce que les fils sont mutuellement torsadés à raison d'au moins 480 TPM (12 TPI) pour former le câblé.

8.  Bandage pneumatique (10) selon la revendication 1, caractérisé en ce que le ou les câblés (40) de la structure de recouvrement sont constitués par trois fils (41, 42, 43) de 500 à 1.500 deniers, les trois fils possédant la même torsion et la même direction de torsion, la direction de torsion des fils étant opposée à celle du câblé, et en ce que les fils sont mutuellement torsadés à raison d'au moins 480 TPM (12 TPI) pour former le câblé.

9.  Bandage pneumatique (10) selon l'une quelconque des revendications 1 à 8, caractérisé en ce que la structure de recouvrement en textile est renforcée par des câblés (30, 40) réalisés en rayonne.

10. Bandage pneumatique (10) selon l'une quelconque des revendications 1 à 8, caractérisé en ce que la structure de recouvrement en textile est renforcée avec des câblés (30, 40) réalisés en une matière présentant, sur un échantillon homogène, un module de Youngs d'au moins 40.000 MPa, telle que de l'aramide.

## FIG.1

## FIG.2

## FIG.3

## FIG.4